# EUROPEAN PATENT APPLICATION

(11) **EP 2 613 474 A1**
(43) Date of publication of application: **10.07.2013**
(21) Application number: 12198555.0
(22) Date of filing: 20.12.2012
(51) Int. Cl.: H04L 12/40, G05B 9/03

(54) **Method and system for control system redundancy**

(30) Priority: 03.01.2012 US 201213342606
(71) Applicant: General Electric Company, Schenectady, NY 12345 (US)
(72) Inventor: Pettigrew, William Robert, Salem, VA Virginia 24153 (US); King, Dennis Brian, Salem, VA Virginia 24153 (US); Chong, Justin Brandon, Salem, VA Virginia 24153 (US)
(74) Representative: Picker, Madeline Margaret

(57) **Abstract**

A method (200) and system (100) for a redundant control system are provided. The control system includes a high speed network bus (102), a controller set (110) communicatively coupled to the network bus wherein the controller set includes at least three Fieldbus controllers (112, 114, 116), and a Fieldbus linking device (130, 132, 134) communicatively coupled to each of the at least three Fieldbus controllers in the controller set and to a Fieldbus network (146). The control system further includes a plurality of Fieldbus devices (144) communicatively coupled to the Fieldbus network, where at least one of the controller set, the Fieldbus linking device, and the plurality of Fieldbus devices are configured to monitor outputs from the plurality of Fieldbus devices and determine an erroneous one of the monitored outputs.

## Description

### BACKGROUND OF THE INVENTION

Embodiments of the invention relate generally to control systems and more specifically to control systems that utilize input voting arbitration in a triple redundant Fieldbus protocol.

Control systems are utilized in a wide variety of different applications. For example, control systems are utilized in conjunction with power generating devices, in power plants, and/or in process plants. A control system typically includes a central controller, or controllers in communication with other components of the control system, for example, sensors, measurement devices, valves, etc. The central controller typically communicates with the other components via suitable network communications.

With the development and adoption of the Foundation Fieldbus standard, Foundation Fieldbus devices have been incorporated into control systems. At least some known controllers used with Foundation Fieldbus devices include an internal voting scheme amongst interconnected controllers to detect controller health problems and mitigate those problems before an output is generated and transmitted to devices over the network. However, erroneous measured values coming from Fieldbus devices or non-Fieldbus devices may be received by associated controllers in communication with the Fieldbus devices. Such erroneous values may then be used to computations performed by the controllers and passed on to other equipment communicatively coupled to the network.

### BRIEF DESCRIPTION OF THE INVENTION

In one embodiment, a control system includes a high speed network bus, a controller set communicatively coupled to the network bus wherein the controller set includes at least three Fieldbus controllers, and a Fieldbus linking device communicatively coupled to each of the at least three Fieldbus controllers in the controller set and to a Fieldbus network. The control system further includes a plurality of Fieldbus devices communicatively coupled to the Fieldbus network, where at least one of the controller set, the Fieldbus linking device, and the plurality of Fieldbus devices are configured to monitor outputs from the plurality of Fieldbus devices and determine an erroneous one of the monitored outputs.

In another embodiment, a method of providing multiple control system redundancy includes communicatively coupling a controller set to a high-speed network bus, the controller set including at least three Fieldbus controllers, communicatively coupling a Fieldbus linking device to each of the at least three Fieldbus controllers in the controller set and to a Fieldbus network, and communicatively coupling a plurality of Fieldbus devices to the Fieldbus network, where at least one of the controller set, the Fieldbus linking device, and the plurality of Fieldbus devices are configured to monitor outputs from the plurality of Fieldbus devices and determine an erroneous one of the monitored outputs.

In yet another embodiment, a control system includes a triple-redundant controller set including three Fieldbus controllers, each including an output communicatively coupled to a high speed network bus and an input communicatively coupled to at least one of a bus linking device and an input output module, the controllers configured to receive an indication of at least one of an erroneous input to one other of the three Fieldbus controllers and an erroneous output of one other of the three Fieldbus controllers. The control system further includes a voting module configured to receive the indication and command the erroneous output to match the output of one of the other three Fieldbus controllers.

### BRIEF DESCRIPTION OF THE DRAWINGS

FIGS. 1-2 show example embodiments of the method and system described herein.
FIG. 1 is a schematic block diagram of a control system in accordance with an example embodiment of the present invention; and
FIG. 2 is a flow chart of a method 200 of providing multiple control system redundancy in accordance with an example embodiment of the present invention.

### DETAILED DESCRIPTION OF THE INVENTION

The following detailed description illustrates embodiments of the invention by way of example and not by way of limitation. It is contemplated that the invention has general application to analytical and methodical embodiments of operating control systems in industrial, commercial, and residential applications.

As used herein, an element or step recited in the singular and preceded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

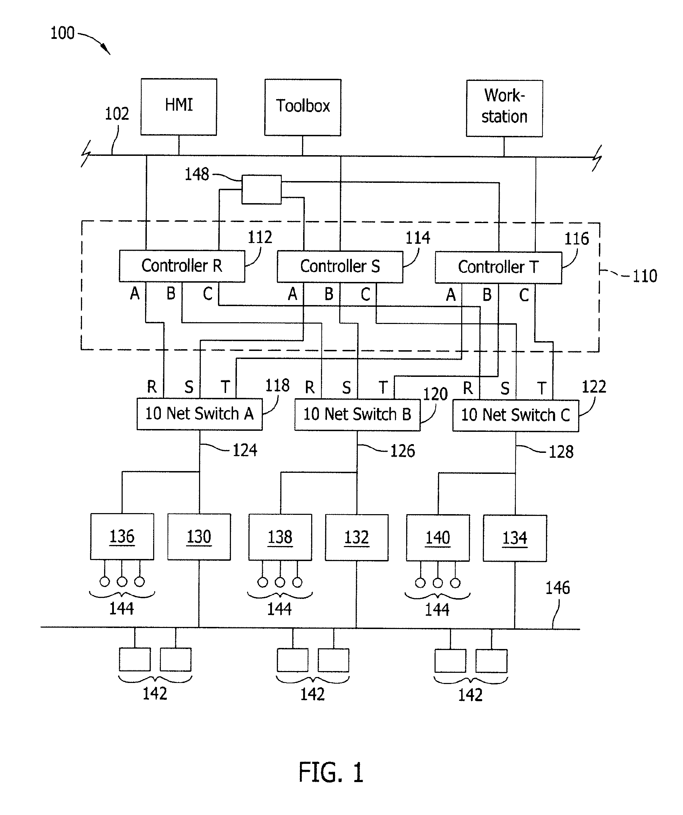

FIG. 1 is a schematic block diagram of a control system 100 in accordance with an example embodiment of the present invention. In the example embodiment, control system 100 includes a high speed network bus 102, for example, a plant-wide network bus. A plurality of workstations may be communicatively coupled to bus 102, for example, a human machine interface (HMI) 104, a toolbox pc 106, and an alert monitoring workstation 108 are communicatively coupled to bus 102 to provide for control and monitoring of system 100 by a user (not shown). The workstations may facilitate the receipt of user input and/or user commands associated with the operation of the control system 100. The workstations may include one or more suitable computers or computing devices, such as personal computers, hand-held computing devices, mini-computers, etc. Additionally, the workstations may be in communication with other devices of system 100 via one or more suitable network connections, for example, a direct link or direct connection, a local area network, a wide area network, the Internet, a radio frequency (RF) network, a Bluetooth™ enabled network, any suitable wired network, or any suitable wireless network. User commands, instructions, and/or other input associated with the operation of the control system 100 may be received by the workstations and communicated to one or more of a set 110 of controllers 112, 114, and 116. Additionally, output data associated with the operations of the control system 100 and/or a plant or other system monitored by the control system 100 may be communicated to the workstations 130 by controllers 112, 114, and 116 for output and/or display to a user.

The set 110 of controllers 112, 114, and 116 are also each coupled to bus 102. In other embodiments, additional sets of controllers, individual controllers, and other components may also be communicatively coupled to bus 102. In the example embodiment, set 110 includes three controllers 112, 114, and 116, however in other embodiments any number of controllers greater than or equal to three controllers can be included in set 110.

Respective IO Net Switches 118, 120, and 122 are communicatively coupled to associated inputs of controllers 112, 114, and 116. For example, an output of IO Net Switch A 118 is communicatively coupled to an input of each of controllers 112, 114, and 116. Similarly, an output of IO Net Switch B 120 is communicatively coupled to another input of each of controllers 112, 114, and 116 and an output of IO Net Switch C 122 is communicatively coupled to yet another input of each of controllers 112, 114, and 116. IO Net Switches 118, 120, and 122 are configured to distribute signals and/or messages received at a respective input 124, 126, and 128. Each of switches 118, 120, and 122 receives signals and/or messages from one or more Fieldbus linking devices 130, 132, 134 and/or IO modules 136, 138, 140. One or more Fieldbus devices 142 (e.g., HSE and/or H1 Fieldbus devices), and/or one or more other devices 144 (i.e. non-Fieldbus devices) communicate with controllers 112, 114, and 116 through one or more networks 146 and respective Fieldbus linking devices 130, 132, 134 and/or IO modules 136, 138, 140 and switches 118, 120, and 122.

Any number of Fieldbus devices 142 may be utilized in association with the control system 100. One or more of the Fieldbus devices 142 may be in communication with controllers 112, 114, and 116 via network 146. Additionally, in certain embodiments, two or more Fieldbus devices 142 may be in communication with one another via network 146. A wide variety of different types of Fieldbus devices may be utilized as desired in various embodiments of the invention. In certain embodiments, Fieldbus devices 142 may include HSE Fieldbus devices and/or H1 Fieldbus devices. Moreover, HSE Fieldbus devices, such as linking devices 132, may facilitate communications between controllers 112, 114, and 116 and one or more H1 Fieldbus devices 142.

In various embodiments, communications between Fieldbus devices 142 and communications between controllers 112, 114, and 116 and one or more of Fieldbus devices 142 may be facilitated using the Fieldbus protocol.

In the example embodiment, any number of non-Fieldbus devices or other devices 144 may be utilized in association with control system 100. These other devices 144 may include, for example, sensors, gauges, measurements devices, actuators, valves, control subsystems, and/or other devices. One or more of these other devices 144 may be in communication with each other and/or with controllers 112, 114, and 116 via network 146. Additionally, communications to and/or from devices 144 may be facilitated utilizing one or more network protocols other than the Fieldbus protocol, for example, a second protocol associated with control system 100.

One or more networks 146 and/or data buses may include any suitable network or combination of networks that facilitate communications between devices in control system 100. Examples of suitable networks include, but are not limited to, a local area network, a wide area network, the Internet, a radio frequency (RF) network, a Bluetooth™ enabled network, any suitable wired network, any suitable wireless network, or any suitable combination of wired and wireless networks. In certain embodiments of the invention, a single network 146 may facilitate communications between controllers 112, 114, and 116 and both Fieldbus devices 142 and other devices 144.

Switches 118, 120, and 122 may route data within the network 146. Each of switches 118, 120, and 122 may include hardware and/or software components that are operable to facilitate the routing of data within network 146. Examples of suitable switches 118, 120, and 122 include, but are not limited to, network bridges and/or multilayer switches.

In various embodiments, switches 118, 120, and 122 facilitate taking advantage of redundant components provided within network 146. In this regard, adequate operations may be maintained within control system 100 in the event of failure of network devices 142, field devices, and/or other system components including controllers 112, 114, and 116. At least one of controller set 110, Fieldbus linking devices 130, 132, and 134, and plurality of Fieldbus devices 136, 138, and 140 are configured to monitor outputs from plurality of Fieldbus devices 136, 138, and 140 and IO modules 136, 138, 140 to determine an erroneous one of the monitored outputs.

In various embodiments, at least three Fieldbus controllers 112, 114, and 116 are communicatively coupled to each other and are configured to receive indication of an output status of each of the other at least three Fieldbus controllers 112, 114, and 116.

System 100 includes a voting module 148 communicatively coupled, in one embodiment, to each of controllers 112, 114, and 116. In other embodiments, voting module 148 may be communicatively coupled to switches 118, 120, and 122, linking devices 130, 132, and 134, and/or IO modules 136, 138, and 140.

In one embodiment, controllers 112, 114, and 116 each have an output signal deliverable to voting module 148, the output of which, is used to select outputs for one of controllers 112, 114, and 116 that is associated with an output that is determined to be not "true" due to inaccuracy, faulty input, health outside a threshold range or other indication. The input signals to voting module 148 may originate in controllers 112, 114, and 116, switches 118, 120, and 122, linking devices 130, 132, and 134, and/or IO modules 136, 138, and 140 or any of the network devices 142 or other devices 144. Alternatively, the input signals may comprise separate, independent inputs originating from multiple redundant sensors used to measure a common parameter. Feedback signals from voting module 148 are provided as input to each controller 112, 114, and 116.

Each of controllers 112, 114, and 116 include substantially identical devices executing substantially identical algorithms to accomplish an assigned task. In various embodiments, each of controllers 112, 114, and 116 is embodied in a general-purpose digital computer generally including a microprocessor or central processing unit, ROM, RAM, and I/O including A/D and D/A. Each controller has a set of control algorithms, comprising resident program instructions and calibrations stored in ROM and executed to provide the respective functions of each computer.

Voting module 148 includes an algorithm operable to determine which of the outputs of controllers 112, 114, and 116 is "true" (i.e., accurately represents the sensor signal, or, command signal). In one embodiment, the voting algorithm is executed in each of controllers 112, 114, and 116. Alternatively, the voting algorithm may be executed in a fourth, separate controller 148. Output from the voting algorithm is provided back to controllers 112, 114, and 116. The voting algorithm provides controllers 112, 114, and 116 a command to replace an output of one of controllers 112, 114, and 116 determined to have an "untrue" output with an output of another of controllers 112, 114, and 116.

In one embodiment, voting module 148 is configured to receive an output status of each of controllers 112, 114, and 116 and compare an output of each other controllers 112, 114, and 116 with its own output to determine an output error in at least one of controllers 112, 114, and 116.

In an alternative embodiment, voting module 148 is configured to receive an indication of a health of each of controllers 112, 114, and 116. In various embodiments, voting module 148 is configured to determine a health of each of controllers 112, 114, and 116.

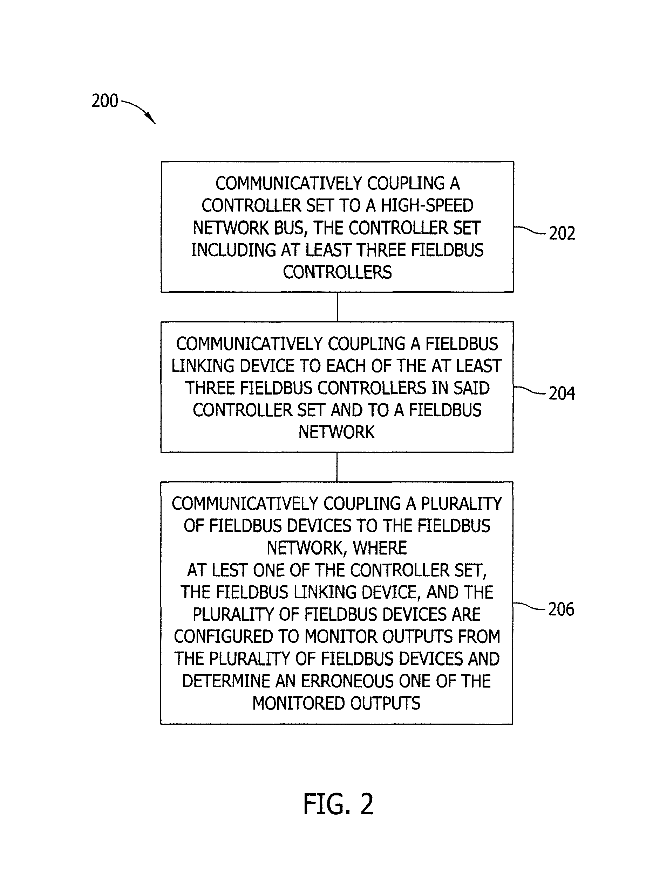

FIG. 2 is a flow chart of a method 200 of providing multiple control system redundancy in accordance with an example embodiment of the present invention. In the example embodiment, method 200 includes communicatively coupling 202 a controller set to a high-speed network bus, the controller set including at least three Fieldbus controllers, communicatively coupling 204 a Fieldbus linking device to each of the at least three Fieldbus controllers in the controller set and to a Fieldbus network, and communicatively coupling 206 a plurality of Fieldbus devices to the Fieldbus network, where at least one of the controller set, the Fieldbus linking device, and the plurality of Fieldbus devices are configured to monitor outputs from the plurality of Fieldbus devices and determine an erroneous one of the monitored outputs.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by a processor, including RAM memory, ROM memory, EPROM memory, EEPROM memory, and nonvolatile RAM (NVRAM) memory. The above memory types are example only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is monitoring process parameter sensor signals and control system components for inaccurate values due to component failure, health, calibration, network, and/or signal transmission errors in a redundant Fieldbus environment and remediating the inaccurate values or errors using a voting scheme embodied on a separate module or algorithm integral with any of the control system components. Any such resulting program, having computer-readable code means, may be embodied or provided within one or more computer-readable media, thereby making a computer program product, i.e., an article of manufacture, according to the discussed embodiments of the disclosure. The computer readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The above-described embodiments of a method and system of providing multiple redundancy in a control system provides a cost-effective and reliable means for monitoring process parameter and controller output signals to determine when a monitored parameter and/or output is in error and providing an alternative output from another component. More specifically, the methods and systems described herein facilitate providing triple redundancy in a Fieldbus environment. As a result, the methods and systems described herein facilitate operating a control system in a cost-effective and reliable manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A control system (100) comprising:
a high speed network bus (102);
a controller set (110) communicatively coupled to said network bus, said controller set comprising at least three Fieldbus controllers (112, 114, 116);
a Fieldbus linking device (130, 132, 134) communicatively coupled to each of the at least three Fieldbus controllers in said controller set and to a Fieldbus network (146); and
a plurality of Fieldbus devices (144) communicatively coupled to said Fieldbus network, where
at least one of said controller set, said Fieldbus linking device, and said plurality of Fieldbus devices are configured to monitor outputs from said plurality of Fieldbus devices and determine an erroneous one of the monitored outputs.

2. A control system in accordance with Claim 1, wherein each said at least three Fieldbus controllers are communicatively coupled to each other said at least three Fieldbus controllers.

3. A control system in accordance with Claim 1 or Claim 2, wherein each said at least three Fieldbus controllers receive indication of an output status of each other said at least three Fieldbus controllers.

4. A control system in accordance with Claim 1, 2 or 3, wherein each said at least three Fieldbus controllers vote with at least some of the other said at least three Fieldbus controllers to determine an output status of each other said at least three Fieldbus controllers.

5. A control system in accordance with Claim 4, wherein each said at least three Fieldbus controllers compare an output of each other said at least three Fieldbus controllers with its own output to determine an output error in at least one of said at least three Fieldbus controllers.

6. A control system in accordance with any preceding Claim, further comprising a voting module (148) configured to receive an indication of a health of each of said at least three Fieldbus controllers.

7. A control system in accordance with any preceding Claim, further comprising a voting module (148) configured to determine a health of each of said at least three Fieldbus controllers.

8. A control system in accordance with any preceding Claim, wherein an output of one of said at least three Fieldbus controllers is used to replace an output of another of said at least three Fieldbus controllers that is determined to be erroneous or associated with a controller having health outside a predetermined threshold.

9. A method (200) of providing multiple control system redundancy, said method comprising:
communicatively coupling (202) a controller set to a high-speed network bus, the controller set including at least three Fieldbus controllers;
communicatively coupling (204) a Fieldbus linking device to each of the at least three Fieldbus controllers in said controller set and to a Fieldbus network; and
communicatively coupling (206) a plurality of Fieldbus devices to the Fieldbus network, where
at least one of the controller set, the Fieldbus linking device, and the plurality of Fieldbus devices are configured to monitor outputs from the plurality of Fieldbus devices and determine an erroneous one of the monitored outputs.

10. A method in accordance with Claim 9, further comprising communicatively coupling each of the at least three Fieldbus controllers to each other at least three Fieldbus controllers.

11. A method in accordance with Claim 9 or Claim 10, further comprising receiving by each at least three Fieldbus controllers an indication of an output status of each other of the at least three Fieldbus controllers.

12. A method in accordance with Claim 9, 10 or 11 further comprising voting by each of the at least three Fieldbus controllers with at least some of the other at least three Fieldbus controllers to determine an output status of each other at least three Fieldbus controllers.

13. A method in accordance with any one of Claims 9 to 12, further comprising comparing by each of the at least three Fieldbus controllers an output of each other at least three Fieldbus controllers with its own output to determine an output error in at least one of the at least three Fieldbus controllers.

14. A method in accordance with any one of Claims 9 to 13, further comprising receiving by a voting module an indication of a health of each of said at least three Fieldbus controllers.

15. A method in accordance with any one of Claims 9 to 14, further comprising determining by a voting module a health of each of the at least three Fieldbus controllers.

16. A method in accordance with any one of Claims 9 to 15, further comprising replacing an output of one of the at least three Fieldbus controllers with an output of another of the at least three Fieldbus controllers that is determined to be erroneous or associated with a controller having health outside a predetermined threshold.
